# EUROPEAN PATENT SPECIFICATION

(11) **EP 3 966 454 B1**
(45) Date of publication and mention of the grant of the patent: **26.06.2024**
(21) Application number: 20729449.7
(22) Date of filing: 11.05.2020
(51) Int. Cl.: F04D 17/12, F04D 25/06, F04D 29/051, H02K 7/09

(54) **COMPRESSOR WITH THRUST CONTROL**
VERDICHTER MIT SCHUBREGELUNG
COMPRESSEUR À COMMANDE DE POUSSÉE

(30) Priority: 10.05.2019 US 201962846026 P
(43) Date of publication of application: 16.03.2022
(73) Proprietor: Carrier Corporation, Palm Beach Gardens, FL 33418 (US)
(72) Inventor: SISHTLA, Vishnu M., Palm Beach Gardens, Florida 33418 (US)
(74) Representative: Dehns
(86) International application number: PCT/US2020/032296
(87) International publication number: WO 2020/231897

(56) References cited:
- WO-A1-2019/199318
- DE-A1-102016 107 855
- GB-A- 2 553 362
- US-A- 3 965 380
- US-A1- 2002 192 087
- US-A1- 2016 290 345
- US-A1- 2017 159 665
- US-A1- 2017 237 317

## Description

### BACKGROUND

Compressors compress fluid by rotation of one or more impellers via a shaft. In a centrifugal compressor, for example, the shaft and impellers can be rotated by a motor, such as an electric motor. In a centrifugal compressor, for example, the impellers impart kinetic energy to the fluid, then, the fluid passes through a diffuser, which slows the flow of the fluid and converts the kinetic energy into an increase in pressure (e.g., compression).

During operation of compressors, forces generated within the compressor can cause compressor components to become misaligned with one another. Misalignment can cause wear and reduce the lifetime of certain compressor components.

It is known from DE102016107855 to provide a side channel blower, in particular for a vehicle heater, comprising a blower housing, a blower motor with a stator assembly fixedly supported with respect to the blower housing and a rotor assembly supported by at least one bearing assembly such that it can rotate about a rotor axis of rotation with respect to the blower housing with a rotor shaft, a conveyor wheel which is axially opposite to an end face of the fan housing and covers an annular conveyor channel which is designed to be open axially on the end face of the fan housing in the direction away from the stator arrangement. The conveyor wheel being connected to the rotor shaft is coupled for joint rotation about the rotor axis of rotation, wherein the at least one bearing assembly has a bearing clearance that allows axial movement of the rotor assembly and the impeller, wherein in a first axial end position of the rotor assembly with respect to of the blower housing the impeller has a minimum distance with respect to the end face of the fan housing and in a second axial end position of the rotor arrangement with respect to the fan housing, the impeller has a maximum distance from the end face of the fan housing, with a prestressing arrangement for axially prestressing the rotor arrangement in the direction of one of the end positions, wherein the biasing assembly comprises the fan motor.

### SUMMARY

According to an aspect of the invention, there is provided a compressor including an electric motor, a stator, and a rotor configured to rotate with respect to the stator. The stator has a length Ls and the rotor has a length Lr. The length Lr of the rotor is less than the length Ls of the stator. At least one impeller is configured to be driven by the electric motor via a shaft. At least one bearing is configured to facilitate rotation of the shaft. At least one balance piston is configured to balance aerodynamic forces on the shaft, the aerodynamic forces generally aligned with an axis of the compressor.

In a further example of the foregoing embodiment, the compressor is a centrifugal compressor.

In a further example of any of the foregoing embodiments, the compressor is configured to compress a fluid, and the fluid is refrigerant.

In a further example of any of the foregoing embodiments, the difference between the length Lr of the rotor and the length Ls of the stator is between about 1 and 5% of the length Lr of the rotor.

In a further example of any of the foregoing embodiments, the difference between the length Lr of the rotor and the length Ls of the stator is between about 1 and 3% of the length Lr of the rotor.

In a further example of any of the foregoing embodiments, the difference between the length Lr of the rotor and the length Ls of the stator is about 1.5% of the length Lr of the rotor.

In a further example of any of the foregoing embodiments, the difference between the length Lr of the rotor and the length Ls of the stator is between about 2 and 5 times a predetermined manufacturing tolerance value for the length Lr of the rotor.

In a further example of any of the foregoing embodiments, the difference between the length Lr of the rotor and the length Ls of the stator is between about 2 and 3 times the predetermined manufacturing tolerance value for the length Lr of the rotor.

In a further example of any of the foregoing embodiments, a sum of electromagnetic forces generated by the electric motor in a direction generally aligned with the axis are less than about 10% of the aerodynamic forces.

According to a further aspect, there is provided a method of compressing a fluid using a compressor including rotating an impeller with an electric motor via a shaft, the impeller being configured to compress a fluid and rotation of the shaft being facilitated by at least one bearing. The electric motor includes a stator and a rotor that is configured to rotate with respect to the stator. The stator has a length Ls and the rotor has a length Lr. The length Lr of the rotor is less than the length Ls of the stator when the rotor rotates. Aerodynamic forces on the shaft are balanced by at least one balance piston, the aerodynamic forces generally aligned with an axis of the compressor.

In a further example of the foregoing method, the fluid is refrigerant.

### BRIEF DESCRIPTION OF THE DRAWINGS

Figure 1 schematically illustrates a compressor.
Figure 2 schematically illustrates a detail view of a motor of the compressor of Figure 1.

### DETAILED DESCRIPTION

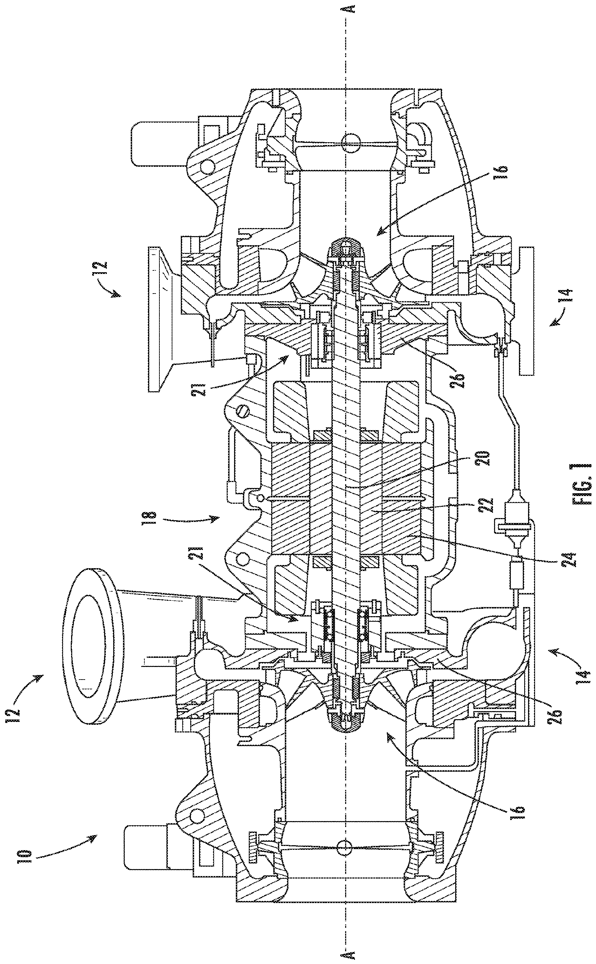

An example compressor 10 is schematically shown in Figure 1. In this example, the compressor 10 is a centrifugal compressor, though other compressors are contemplated by this disclosure. The compressor 10 includes suction (inlet) ports 12 and discharge (outlet) ports 14. The compressor 10 includes one or more impellers 16 which rotate to draw fluid from the suction ports 12 and compressor the fluid. An example fluid is refrigerant.

An electric motor 18 drives the impellers 16 via a shaft 20. Bearings 21 facilitate rotation of the shaft 20. In this example, the compressor 10 includes one shaft 20 that drives two impellers 16, each of which is associated with a suction port 12 and a discharge port 14, though other arrangements are contemplated.

The motor 18 includes a stator 24 and a rotor 22. As is generally known, the stator 24 remains stationary while the rotor 22 rotates due to electromagnetic forces generated by the interaction of the rotor 22 and stator 24. The rotor 22 rotates the shaft 20, which in turn rotates the impellers 16 as discussed above.

During operation of the compressor 10, axial forces, e.g., those generally aligned with an axis A of the compressor 10, are generated by aerodynamic forces and electromagnetic forces. These axial forces are represented by vectors which are additive and together can be characterized as a "net thrust" of the compressor 10. The axial forces can cause various components of the compressor 10 to be urged out of alignment with one another. This in turn can cause stress and wear on the bearings 21, especially where the fluid is a low viscosity fluid like refrigerant. Accordingly, reducing the axial forces (e.g., reducing "net thrust") improves bearing 21 life, and in some cases, permits the use of smaller bearings 21.

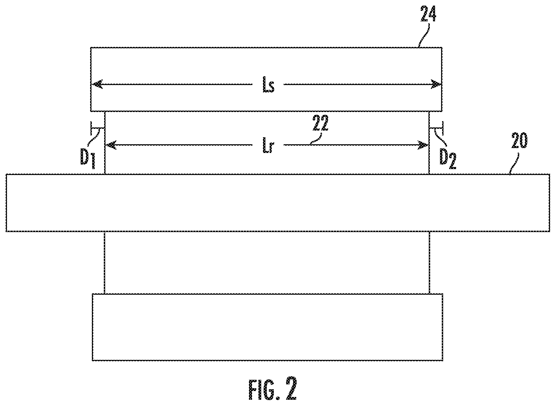

The aerodynamic axial forces are generated by fluid travelling through the compressor 10 and being compressed. In one example, aerodynamic axial forces are managed or reduced by balance pistons 26 on the shaft 20. In the example of Figure 2, there is one balance piston 26 associated with each impeller 16, though more or less balance pistons 26 could be used. The balance pistons 26 are arranged and sized in such a way that they balance aerodynamic axial forces exerted on the shaft 20 to reduce overall axial aerodynamic forces within the compressor 10.

The electromagnetic axial forces are generated by misalignment of the rotor 22 with respect to the stator 24. Misalignment can be caused by shifting of the rotor 22 and stator 24 during operation of the motor 18 and/or mismatch in rotor 22 and stator 24 sizes due to manufacturing tolerances. In particular, electromagnetic axial forces are increased when the rotor 22 overhangs the stator 24 on either side. That is, during operation, the rotor 22 may shift from being centered with respect to the stator 24 in either axial direction so that overhang occurs on one side of the rotor 22. The amount of overhang may additionally or alternatively be caused by mismatch in rotor 22 and stator 24 length due to manufacturing tolerances, e.g., where the rotor 22 is slightly longer than the stator 24.

Figure 2 shows a detail view of the motor 18. As shown, the rotor 22 has a length Lr that is less than a length Ls of the stator 24. The length Ls is selected so that overhang of the rotor 22 as discussed above is minimized. Instead, the stator 24 overhangs the rotor 22 by a distance D 1 and D2 on either side as shown in Figure 2 when the rotor 22 is centered with respect to the stator 24. Accordingly, a difference Δ between the length Lr of the rotor 22 and the length Ls of the stator 24 is equal to the sum of D1 and D2. Because the length Lr of the rotor 22 is less than a length Ls of the stator 24, neither axial shifting of the rotor 22 with respect to the stator 24 nor manufacturing tolerances cause overhang.

In a particular example, the difference Δ is between about 1 and 5% of the length Lr of the rotor 22. For instance, if the rotor 22 has a length of 10 inches (25.4 cm), the difference Δ is between about 0.1 inches (2.54 mm) and 0.5 inches (12.7 mm), and the length of the stator 24 is between about 9.9 inches (25.1 cm) and 9.5 inches (24.1 cm).

In a more particular example, the difference Δ is between about 1% and 3% of the length Lr of the rotor 22.

In a more particular example, the difference Δ is about 1.5% of the length Lr of the rotor 22.

In another example, the difference Δ is between about 2 and 5 times the manufacturing tolerance for the length of the rotor 22. The manufacturing tolerance for the length of the rotor 22 is a predetermined tolerance value. For instance, if the rotor 22 is manufactured with a specification that it must be within 0.1 inches (2.54 mm) of a desired length Lr of the rotor 22, the difference Δ is between about 0.2 (5.08 mm) and 0.3 inches (7.62 mm) in this example.

In a more particular example, the difference Δ is between about 2 and 3 times the manufacturing tolerance for the length of the rotor 22.

The compressor 10 having stator 24 and rotor 22 with a difference Δ in their respective lengths as discussed above results in lower electromagnetic axial forces because the difference Δ ensures that the rotor 22 does not overhang the stator 24. As a result, the bearing 21 experiences less stress and wear. Therefore, the bearing 21 lifetime is improved, and in some cases, a smaller bearing 21 can be used.

In one example, the compressor 10 having stators 24 and rotors 22 with a difference Δ in their respective lengths as discussed above results in electromagnetic axial forces that are about 10% or less of the aerodynamic axial forces discussed above.

The preceding description is exemplary rather than limiting in nature. Variations and modifications to the disclosed examples may become apparent to those skilled in the art. The scope of legal protection given to this disclosure can only be determined by studying the following claims.

## Claims

1. A compressor (10), comprising:
an electric motor (18), including:
a stator (24); and
a rotor (22) configured to rotate with respect to the stator, wherein the stator has a length Lₛ and the rotor has a length Lᵣ, and wherein the length Lᵣ of the rotor is less than the length Lₛ of the stator;
at least one impeller (16) configured to be driven by the electric motor via a shaft (20);
at least one bearing (21) configured to facilitate rotation of the shaft; and
at least one balance piston (26) configured to balance aerodynamic forces on the shaft, the aerodynamic forces generally aligned with an axis of the compressor.

2. The compressor (10) of claim 1, wherein the compressor is a centrifugal compressor.

3. The compressor (10) of claim 1 or 2, wherein the compressor is configured to compress a fluid, and the fluid is refrigerant.

4. The compressor (10) of claim 1, 2 or 3, wherein a difference between the length Lᵣ of the rotor (22) and the length Lₛ of the stator (24) is between about 1 and 5% of the length Lᵣ of the rotor.

5. The compressor (10) of claim 4, wherein the difference between the length Lᵣ of the rotor (22) and the length Lₛ of the stator (24) is between about 1 and 3% of the length Lᵣ of the rotor.

6. The compressor (10) of claim 5, wherein the difference between the length Lᵣ of the rotor (22) and the length Lₛ of the stator (24) is about 1.5% of the length Lᵣ of the rotor.

7. The compressor (10) of any preceding claim, wherein the difference between the length Lᵣ of the rotor (22) and the length Lₛ of the stator (24) is between about 2 and 5 times a predetermined manufacturing tolerance value for the length Lᵣ of the rotor.

8. The compressor (10) of claim 7, wherein the difference between the length Lᵣ of the rotor (22) and the length Lₛ of the stator (24) is between about 2 and 3 times the predetermined manufacturing tolerance value for the length Lᵣ of the rotor.

9. The compressor (10) of any preceding claim , wherein a sum of electromagnetic forces generated by the electric motor (18) in a direction generally aligned with the axis are less than about 10% of the aerodynamic forces.

10. A method of compressing a fluid using a compressor (10), comprising:
rotating an impeller (16) with an electric motor (18) via a shaft (20), the impeller configured to compress a fluid, rotation of the shaft facilitated by at least one bearing (21), the electric motor including:
a stator (24); and
a rotor (22) configured to rotate with respect to the stator, wherein the stator has a length Lₛ and the rotor has a length Lᵣ, and wherein the length Lᵣ of the rotor is less than the length Lₛ of the stator when the rotor rotates,
wherein aerodynamic forces on the shaft are balanced by at least one balance piston (26), the aerodynamic forces generally aligned with an axis of the compressor (10).

11. The method of claim 10, wherein the fluid is refrigerant.

## Patentansprüche

1. Verdichter (10), umfassend:
einen Elektromotor (18), beinhaltend:
einen Stator (24); und
einen Rotor (22), der zum Drehen in Bezug auf den Stator konfiguriert ist, wobei der Stator eine Länge Lₛ aufweist und der Rotor eine Länge Lᵣ aufweist und wobei die Länge Lᵣ des Rotors kleiner ist als die Länge Lₛ des Stators;
mindestens ein Laufrad (16), das zum Antreiben durch den Elektromotor über eine Welle (20) konfiguriert ist;
mindestens ein Lager (21), das zum Erleichtern der Drehung der Welle konfiguriert ist; und
mindestens einen Ausgleichskolben (26), der zum Ausgleichen von aerodynamischen Kräften auf die Welle konfiguriert ist, wobei die aerodynamischen Kräfte im Allgemeinen an einer Achse des Verdichters ausgerichtet sind.

2. Verdichter (10) nach Anspruch 1, wobei der Verdichter ein Zentrifugalverdichter ist.

3. Verdichter (10) nach Anspruch 1 oder 2, wobei der Verdichter zum Verdichten eines Fluids konfiguriert ist und das Fluid ein Kühlmittel ist.

4. Verdichter (10) nach Anspruch 1, 2 oder 3, wobei ein Unterschied zwischen der Länge Lᵣ des Rotors (22) und der Länge Lₛ des Stators (24) zwischen etwa 1 und 5 % der Länge Lᵣ des Rotors beträgt.

5. Verdichter (10) nach Anspruch 4, wobei der Unterschied zwischen der Länge Lᵣ des Rotors (22) und der Länge Lₛ des Stators (24) zwischen etwa 1 und 3 % der Länge Lᵣ des Rotors beträgt.

6. Verdichter (10) nach Anspruch 5, wobei der Unterschied zwischen der Länge Lᵣ des Rotors (22) und der Länge Lₛ des Stators (24) etwa 1,5 % der Länge Lᵣ des Rotors beträgt.

7. Verdichter (10) nach einem der vorhergehenden Ansprüche, wobei der Unterschied zwischen der Länge Lᵣ des Rotors (22) und der Länge Lₛ des Stators (24) zwischen dem etwa 2- bis 5-Fachen eines vorbestimmten Herstellungstoleranzwerts der Länge Lᵣ des Rotors beträgt.

8. Verdichter (10) nach Anspruch 7, wobei der Unterschied zwischen der Länge Lᵣ des Rotors (22) und der Länge Lₛ des Stators (24) zwischen dem etwa 2- bis 3-Fachen des vorbestimmten Herstellungstoleranzwerts der Länge Lᵣ des Rotors beträgt.

9. Verdichter (10) nach einem der vorhergehenden Ansprüche, wobei eine Summe von elektromagnetischen Kräften, die von dem Elektromotor (18) in einer im Allgemeinen an der Achse ausgerichteten Richtung erzeugt werden, weniger als etwa 10 % der aerodynamischen Kräfte beträgt.

10. Verfahren zum Verdichten eines Fluids unter Verwendung eines Verdichters (10), umfassend:
Rotieren eines Laufrads (16) mit einem Elektromotor (18) über eine Welle (20), wobei das Laufrad zum Verdichten eines Fluids konfiguriert ist, wobei eine Drehung der Welle durch mindestens ein Lager (21) erleichtert wird, wobei der Elektromotor Folgendes beinhaltet:
einen Stator (24); und
einen Rotor (22), der zum Drehen in Bezug auf den Stator konfiguriert ist, wobei der Stator eine Länge Lₛ aufweist und der Rotor eine Länge Lᵣ aufweist und wobei die Länge Lᵣ des Rotors kleiner ist als die Länge Lₛ des Stators, wenn der Rotor dreht,
wobei aerodynamische Kräfte auf die Welle durch mindestens einen Ausgleichskolben (26) ausgeglichen werden, wobei die aerodynamischen Kräfte im Allgemeinen an einer Achse des Verdichters (10) ausgerichtet sind.

11. Verfahren nach Anspruch 10, wobei das Fluid ein Kühlmittel ist.

## Revendications

1. Compresseur (10), comprenant :
un moteur électrique (18), comportant :
un stator (24) ; et
un rotor (22) conçu pour tourner par rapport au stator, dans lequel le stator a une longueur Lₛ et le rotor a une longueur Lᵣ, et dans lequel la longueur Lᵣ du rotor est inférieure à la longueur Lₛ du stator ;
au moins une roue (16) conçue pour être entraînée par le moteur électrique par l'intermédiaire d'un arbre (20) ;
au moins un palier (21) conçu pour faciliter la rotation de l'arbre ; et
au moins un piston d'équilibrage (26) conçu pour équilibrer les forces aérodynamiques sur l'arbre, les forces aérodynamiques étant généralement alignées avec un axe du compresseur.

2. Compresseur (10) selon la revendication 1, dans lequel le compresseur est un compresseur centrifuge.

3. Compresseur (10) selon la revendication 1 ou 2, dans lequel le compresseur est conçu pour comprimer un fluide, et le fluide est un réfrigérant.

4. Compresseur (10) selon la revendication 1, 2 ou 3, dans lequel une différence entre la longueur Lᵣ du rotor (22) et la longueur Lₛ du stator (24) est comprise entre environ 1 et 5 % de la longueur Lᵣ du rotor.

5. Compresseur (10) selon la revendication 4, dans lequel la différence entre la longueur Lᵣ du rotor (22) et la longueur Lₛ du stator (24) est comprise entre environ 1 et 3 % de la longueur Lᵣ du rotor.

6. Compresseur (10) selon la revendication 5, dans lequel la différence entre la longueur Lᵣ du rotor (22) et la longueur Lₛ du stator (24) est d'environ 1,5 % de la longueur Lᵣ du rotor.

7. Compresseur (10) selon une quelconque revendication précédente, dans lequel la différence entre la longueur Lᵣ du rotor (22) et la longueur Lₛ du stator (24) est comprise entre environ 2 et 5 fois une valeur de tolérance de fabrication prédéterminée pour la longueur Lᵣ du rotor.

8. Compresseur (10) selon la revendication 7, dans lequel la différence entre la longueur Lᵣ du rotor (22) et la longueur Lₛ du stator (24) est comprise entre environ 2 et 3 fois la valeur de tolérance de fabrication prédéterminée pour la longueur Lᵣ du rotor.

9. Compresseur (10) selon une quelconque revendication précédente, dans lequel une somme des forces électromagnétiques générées par le moteur électrique (18) dans une direction généralement alignée avec l'axe est inférieure à environ 10 % des forces aérodynamiques.

10. Procédé de compression d'un fluide à l'aide d'un compresseur (10), comprenant :
la rotation d'une roue (16) avec un moteur électrique (18) par l'intermédiaire d'un arbre (20), la roue étant conçue pour comprimer un fluide, la rotation de l'arbre étant facilitée par au moins un palier (21), le moteur électrique comportant :
un stator (24) ; et
un rotor (22) conçu pour tourner par rapport au stator, dans lequel le stator a une longueur Lₛ et le rotor a une longueur Lᵣ, et dans lequel la longueur Lᵣ du rotor est inférieure à la longueur Lₛ du stator quand la roue tourne,
dans lequel les forces aérodynamiques sur l'arbre sont équilibrées par au moins un piston d'équilibrage (26), les forces aérodynamiques étant généralement alignées avec un axe du compresseur (10).

11. Procédé selon la revendication 10, dans lequel le fluide est un réfrigérant.
